(19) **Europäisches Patentamt / European Patent Office / Office européen des brevets**

(11) **EP 2 600 104 B1**

(12) **FASCICULE DE BREVET EUROPEEN**

(45) Date de publication et mention
de la délivrance du brevet:
**23.08.2017   Bulletin 2017/34**

(51) Int Cl.:
***G01C 19/5762*** *(2012.01)*   ***G01C 19/5747*** *(2012.01)*
***G01C 19/5712*** *(2012.01)*

(21) Numéro de dépôt: **12194966.3**

(22) Date de dépôt: **30.11.2012**

(54) **Micro-capteur inertiel de mouvements de rotation**

Mikro-inertialsensor für Drehbewegungen

Inertial micro-sensor of rotational movements

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **02.12.2011   FR 1161112**

(43) Date de publication de la demande:
**05.06.2013   Bulletin 2013/23**

(73) Titulaire: **COMMISSARIAT À L'ÉNERGIE ATOMIQUE ET AUX ÉNERGIES ALTERNATIVES**
**75015 Paris (FR)**

(72) Inventeurs:
• **Deimerly, Yannick**
**38000 GRENOBLE (FR)**
• **Jourdan, Guillaume**
**38000 GRENOBLE (FR)**

(74) Mandataire: **Decobert, Jean-Pascal**
**Cabinet Hautier**
**20, rue de la Liberté**
**06000 Nice (FR)**

(56) Documents cités:
**EP-A2- 0 785 413**       **WO-A2-2011/016859**
**US-A1- 2004 211 258**   **US-A1- 2009 205 423**
**US-A1- 2010 307 243**

**Description**

DOMAINE TECHNIQUE DE L'INVENTION

La présente invention concerne en général les capteurs inertiels de mouvements et plus particulièrement ceux réalisés sous forme de microsystèmes électromécaniques ou MEMS (de l'anglais « Micro Electro Mechanical Systems »).

ÉTAT DE LA TECHNIQUE

Depuis que l'on sait réaliser des capteurs inertiels de très petites tailles sous forme de MEMS, acronymes de l'anglais « micro electromechanical systems » c'est-à-dire « microsystèmes électromécaniques », leur champ d'application n'a cessé de se développer. Autrefois presque exclusivement réservés à la navigation aérienne et aux applications balistiques, essentiellement militaires, de type fusées et missiles, les capteurs inertiels, dont le coût a considérablement baissé avec leur miniaturisation, sont maintenant couramment employés dans de très nombreuses applications dites « grand public ». Ils sont par exemple utilisés pour la stabilisation d'images d'enregistreurs vidéo ou d'images fixes, caméscopes et appareils photos ; par l'industrie de l'automobile, comme détecteur de choc pour les airbags où le contrôle de la suspension active des véhicules ; dans les consoles de jeux comme détecteurs de mouvements, et dans bien d'autres applications.

Basés essentiellement sur la technologie du silicium, matériau de base de l'industrie de la microélectronique, aussi utilisé dans les MEMS pour ses excellentes propriétés mécaniques, ceux-ci peuvent alors bénéficier de toutes les avancées technologiques apportées par cette industrie. Pour leur fabrication, les MEMS peuvent notamment tirer avantage des améliorations constantes apportées à la photolithographie et autres techniques de gravure largement employées par l'industrie de la microélectronique pour le silicium et tous les autres matériaux qu'elle utilise couramment.

La fabrication des MEMS suit ainsi naturellement la tendance de la microélectronique d'être capable de définir des motifs de dimensions toujours plus petites. On notera que les MEMS les plus petits sont alors souvent qualifiés de NEMS, c'est-à-dire de « nano systèmes électromécaniques » pour marquer cette tendance d'une miniaturisation toujours plus poussée où les dimensions s'expriment alors en nanomètres.

Dans le domaine des micro-capteurs inertiels, la miniaturisation se traduit par le fait que la partie mécanique proprement dite occupe de moins en moins de place vis-à-vis de ses moyens d'interconnexion électrique. Par ailleurs, dans le même temps où la surface des MEMS diminue, on tend à vouloir faire détecter par un même capteur inertiel le maximum d'axes possibles. Dans un système tridimensionnel, on définit jusqu'à six axes de détection qui correspondent à la mesure de la vitesse angulaire dans les trois directions de l'espace, traditionnellement notées X, Y et Z et à la mesure de l'accélération selon les mêmes directions. Il y a un détecteur différent pour chacun des axes à mesurer ce qui augmente d'autant le nombre d'interconnexions électriques dont le capteur doit être pourvu.

Le document US 2009/0205423 A1 divulgue un gyromètre biaxial avec une masse d'inertie excitée suivant deux directions perpendiculaires et un détecteur commun pour les deux forces de Coriolis.

Si la photolithographie a fait de considérables progrès pour permettre une miniaturisation toujours plus poussée, il n'en va cependant pas de même des moyens d'interconnexion des puces de silicium avec leur environnement. La méthode traditionnelle consiste toujours à utiliser la technique dite de « wire bonding » ou frettage d'un fil d'or sur des plots métalliques qui ont été préparés sur chaque puce pour chacune de ses connexions extérieures. Ces plots sont de taille normalisée et ne diminue pas alors même que la partie mécanique du capteur occupe une fraction toujours plus petite de la surface totale du dispositif jusqu'à devenir significativement plus faible que celle occupée par les connexions électriques elles mêmes.

Ainsi, pour pouvoir continuer à miniaturiser les micro-capteurs inertiels il faut pouvoir aussi diminuer la surface occupée par les connexions électriques. C'est donc un objet de l'invention que de décrire un micro-capteur inertiel de mouvement qui réponde à ce problème.

Les autres objets, caractéristiques et avantages de la présente invention apparaîtront à l'examen de la description suivante et des dessins d'accompagnement. Il est entendu que d'autres avantages peuvent être incorporés.

RÉSUMÉ DE L'INVENTION

L'invention est notamment relative à un capteur inertiel de mouvements de rotation comprenant :au moins une masse d'inertie mobile dans l'espace (X, Y, Z) ; un premier excitateur configuré pour générer un premier mouvement vibratoire de la masse d'inertie suivant une première direction (X),de sorte à générer une première force de Coriolis selon une troisième direction (Z), induite par un mouvement de rotation de la masse d'inertie suivant une deuxième direction (Y), les première, deuxième et troisième directions étant perpendiculaires entre elles; un deuxième excitateur configuré pour générer un deuxième mouvement vibratoire de la masse d'inertie suivant la deuxième direction (Y) de sorte à générer une deuxième force de Coriolis selon la troisième direction (Z), induite par un mouvement de rotation de la masse d'inertie suivant la première direction (X); des moyens de détection de la première force de Coriolis et de la deuxième force de Coriolis.

Selon l'invention, les moyens de détection comprennent un détecteur commun pour la première force de Coriolis et de la deuxième force de Coriolis et configuré pour produire un signal électrique traité par un circuit de traitement de sorte à discriminer une première composante du signal électrique correspondant à la première force de Coriolis et une deuxième composante du signal électrique correspondant à la deuxième force de Coriolis.

Le ou les mouvements de rotation détectés par l'invention peuvent être une ou respectivement des composantes de rotation d'un mouvement qui peut être complexe, c'est-à-dire non strictement limité à une rotation pure autour d'un axe.

La masse d'inertie peut être mobile dans un plan parallèle à son propre plan ou en dehors de ce plan (notamment dans un plan perpendiculaire à celui de la masse d'inertie).

Ainsi, selon l'invention, les première et seconde directions X, Y correspondent aux directions d'excitation et la troisième direction Z correspond à la direction de détection ; les directions X, Y peuvent former un plan parallèle à celui de la masse d'inertie comme représenté sur les figures mais aussi un plan perpendiculaire à celui de la masse d'inertie , les excitateurs étant alors disposés dans des plans parallèles à la masse de part et d'autre de celle-ci.

Suivant un aspect de l'invention non limitatif, le détecteur commun mesure un déplacement, suivant Z, d'au moins une masse sur laquelle la force de Coriolis est appliquée, par exemple la masse d'inertie elle-même ou une masse qui lui est liée. La mesure peut notamment être capacitive ou faire appel à au moins une jauge piézorésistive.

Un effet avantageux de l'invention est de disposer, sur une seule sortie électrique, de deux informations de détection.

Parmi les caractéristiques avantageuses de l'invention figurent les options non limitatives suivantes qui peuvent être combinées ou non :

- la fréquence du premier mouvement vibratoire est différente de la fréquence du deuxième mouvement vibratoire ;
- le circuit de traitement des moyens de détection, est configuré pour opérer un traitement fréquentiel du signal électrique ;
- le circuit de traitement comporte un premier filtre de fréquences configuré pour discriminer la première composante du signal électrique et un deuxième filtre de fréquences configuré pour discriminer la deuxième composante du signal électrique ;
- le circuit de traitement comporte, pour chacune des première et deuxième composantes, une démodulation de variation d'amplitude ;
- le premier excitateur est configuré pour faire vibrer la masse d'inertie à sa fréquence de résonance suivant la première direction (X) ;
- le second excitateur est configuré pour faire vibrer la masse d'inertie à sa fréquence de résonance suivant la deuxième direction (Y) ;
- le premier excitateur comporte un générateur du premier mouvement vibratoire et une masse d'excitation entrainée en vibration par le générateur et cinématiquement reliée à la masse d'inertie de sorte à lui fournir le premier mouvement vibratoire et à ne pas transmettre au moins en partie des mouvements suivant la deuxième et la troisième direction (Z) ;
- le deuxième excitateur comporte un générateur du deuxième mouvement vibratoire et une masse d'excitation entrainée en vibration par ledit générateur et cinématiquement reliée à la masse d'inertie de sorte à lui fournir le deuxième mouvement vibratoire et à ne pas transmettre au moins en partie des mouvements suivant la première et la troisième direction (Z) ;
- le dispositif comporte une masse de détection cinématiquement reliée à la masse d'inertie et au niveau de laquelle le détecteur commun détecte la première force de Coriolis et la deuxième force de Coriolis ;
- la masse de détection est cinématiquement reliée à la masse d'inertie selon un axe parallèle à une des première, deuxième ou troisième directions (X, Y, Z) de sorte à être animée du deuxième mouvement vibratoire,
- d'autre part, la liaison peut être faite par une liaison configurée pour former avec la masse d'inertie selon ledit axe, un ensemble d'inertie présentant au moins deux fréquences de résonance selon cet axe ;
- la masse de détection est cinématiquement reliée à la masse d'inertie selon ledit axe de sorte à former, dans la troisième direction (Z) de la première force de Coriolis et de la deuxième force de Coriolis, un ensemble d'inertie présentant au moins deux fréquences de résonance ;
- la fréquence du premier mouvement vibratoire et la fréquence du deuxième mouvement vibratoire sont inférieures ou égales respectivement à une première et une deuxième fréquences de résonance de l'ensemble d'inertie dans la troisième direction ;
- la première fréquence de résonance est une fréquence de résonance en opposition de phase et la deuxième fréquence de résonance est une fréquence de résonance en phase ;
- le dispositif comporte une masse d'inertie additionnelle, ladite masse d'inertie additionnelle étant reliée à la masse d'inertie de manière à transmettre à ladite masse d'inertie additionnelle une force de Coriolis selon la deuxième direction (Y) induite par un mouvement de rotation de ladite masse d'inertie suivant la troisième direction (Z) hors du plan (x, y) ;

- un détecteur additionnel est configuré pour détecter ladite force de Coriolis ;
- une masse d'inertie additionnelle reliée à la masse d'inertie de sorte à transmettre à ladite masse d'inertie additionnelle une force de Coriolis selon la première direction (X) induite par un mouvement de rotation de ladite masse d'inertie suivant la troisième direction (Z) hors du plan (x, y) ;
- un détecteur additionnel est configuré pour détecter ladite force de Coriolis.

BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La figure 1 illustre le schéma de principe d'un gyromètre biaxial selon l'invention et les interactions entre les masses mises en mouvement.
La figure 2 est une vue en plan d'un exemple de mise en oeuvre du gyromètre biaxial à deux masses d'inertie couplées selon l'invention.
La figure 3 illustre un type de ressort dit « replié » qui sert typiquement de ressort de transmission.
La figure 4 illustre un deuxième type de ressort servant de ressort de guidage.
La figure 5 illustre la structure du ressort de couplage liant les deux masses d'inertie.
La figure 6 est une vue en plan d'un gyromètre biaxial selon l'invention dont le moyen de détection des forces de Coriolis est un élément piézorésistif.
La figure 7 est une vue détaillée du bras et des ressorts qui transmettent à l'élément piézorésistif les mouvements de la masse d'inertie.
La figure 8 est un schéma mécanique simplifié d'un système masse ressort a deux masses modélisant le comportement d'excitation du gyromètre selon l'invention.
Les figures 9 et 10 illustrent les fréquences de résonance en excitation de la masse d'inertie selon les deux axes du plan d'excitation.
La figure 11 illustre le cas de la détection de mouvements des masses d'inertie couplées quand elles sont en opposition de phase
La figure 12 illustre le schéma de principe d'une centrale inertielle cinq axes à excitation dans le plan.
Les figures 13a à 13i décrivent les étapes principales d'un procédé de réalisation de MEMS compatible avec la fabrication de capteurs inertiels selon l'invention.
La figure 14 résume des mobilités et fonctions de parties de l'invention dans un mode de réalisation.

Les dessins joints sont donnés à titre d'exemples et ne sont pas limitatifs de l'invention.

DESCRIPTION DÉTAILLÉE DE L'INVENTION

L'invention peut résoudre le problème de la surface occupée par les interconnexions d'un micro-capteur en réduisant le nombre de détecteurs nécessaires et plus particulièrement en permettant qu'un même détecteur puisse détecter plusieurs axes simultanément. L'invention est décrite à travers l'exemple d'un gyromètre comprenant un seul détecteur capable de détecter la vitesse selon plusieurs axes.

Les gyromètres considérés par l'invention sont ceux dans lesquels on utilise l'effet de la force de Coriolis, force qui s'exprime sous la forme du produit vectoriel suivant :

$$F_i = -2 * m * \Omega_j \wedge \upsilon_k$$

Les index *i, j* et *k* correspondant à des axes orthonormés, la force de Coriolis $F_i$ créée est proportionnelle à la masse inertielle *m* et est perpendiculaire à la vitesse angulaire $\Omega_j$ et à la vitesse d'excitation $\upsilon_k$. Une excitation est donc nécessaire afin de fournir une vitesse d'excitation. Une excitation électrostatique peut s'écrire :

$$v_k = V_0 * \cos(w_{EXC} * t)$$

La force de Coriolis fait intrinsèquement une opération de modulation d'amplitude, telle que définie en radioélectricité, d'une tension $V_0$. En effet si $i, j$ et $k$ représentent une base orthogonale :

$$F_i = -2 * m * \Omega_j * V_0 * \cos(\omega_{EXC} * t)$$

On peut donc moduler $\Omega_j$ par la fréquence d'excitation $w_{EXC}$. De plus on remarque que $j$ et $k$ sont interchangeables dans la première des équations ci-dessus :

$$F_i = -2 * m * \Omega_k \wedge \upsilon_j$$

Il est donc possible de créer une force d'axe $i$ possédant deux composantes :

$$F_i = -2 * m * \Omega_j \wedge \upsilon_k \quad \text{et} \quad F_i = -2 * m * \Omega_k \wedge \upsilon_j$$

qui s'ajoutent : $\sum F_i = FTOT_i = -2 * m * (\Omega_j \wedge \upsilon_k + \Omega_k \wedge \upsilon_j)$ ou encore :

$$FTOT_i = -2 * m * [\Omega_j * V_0 * \cos(\omega_{1EXC} * t) - \Omega_k * V_1 * \cos(\omega_{2EXC} * t)]$$

La force selon l'axe $i$ possède donc une composante à la fréquence $w1_{EXC}$ et une seconde composante à la fréquence $w2_{EXC}$. La détection de la force va pouvoir se faire en utilisant un détecteur piézorésistif dont la résistance varie en fonction des contraintes mécaniques qu'on lui applique, ou en utilisant un détecteur de mouvement capacitif. Dans les deux cas, le signal mesuré conserve le spectre fréquentiel à deux composantes ci-dessus. Comme l'intensité des composantes $w1_{EXC}$ et $w2_{EXC}$ est proportionnelle, respectivement, à $\Omega_j$ et $\Omega_k$ il devient possible d'extraire deux vitesses de rotation d'un même signal provenant d'un unique détecteur ouvrant ainsi la porte à la possibilité de réduire le nombre de détecteurs d'un gyromètre employant cette technique et donc le nombre de ses connexions extérieures qui limitent actuellement la miniaturisation de ces dispositifs comme on l'a vu précédemment.

Il faut donc pouvoir extraire du signal fourni par le détecteur unique une composante à la fréquence $w1_{EXC}$ qui correspond à la vitesse angulaire selon $j$ et une seconde composante à la fréquence $w2_{EXC}$ qui correspond à la vitesse angulaire selon $k$. Cela se fait à l'aide de moyens de filtrage qui peuvent être conventionnels et mis en oeuvre, par exemple, dans un circuit électronique dédié au gyromètre et destiné à fournir les signaux électriques d'excitation et de contrôle ainsi qu'à mesurer le signal délivré par le détecteur unique. La séparation des informations de vitesse fournies par le détecteur se fait typiquement en utilisant des filtres passe-bande conventionnels, passifs ou actifs, dont la bande passante est centrée sur les fréquences ci-dessus. La sélectivité des filtres pourra être importante de façon à ne transmettre qu'une faible fraction du spectre de fréquences autour de chacune des fréquences d'excitation. On obtient donc deux signaux électriques différents :

$$S_1 = -2 * m * \Omega_j * V_0 * \cos(\omega_{1EXC} * t)$$

$$S_2 = -2 * m * \Omega_j * V_1 * \cos(\omega_{2EXC} * t)$$

La démodulation des variations d'amplitude des signaux ci-dessus, qui traduisent la vitesse du mouvement que l'on cherche à mesurer, est ensuite effectuée séparément sur chaque signal extrait. Parmi les moyens de démodulation connus, la méthode la plus simple reste le filtrage de la composante haute fréquence à l'aide d'un détecteur d'enveloppe fait d'une diode couplée à un filtre passe-bas. Il s'agit là d'un circuit standard bien connu dans le domaine de la radiodiffusion pour décoder des signaux modulés en amplitude.

$V_0$ et $V_1$ étant, respectivement, l'amplitude des signaux d'excitation suivant $k$ et $j$, $\Omega_j$ et $\Omega_k$ les vitesses de rotation, $G1$ et $G2$ les gains des filtres passe-bande et $m$ la masse d'inertie, on obtient bien un signal $U_1$ proportionnel à la vitesse de rotation selon $j$ et un signal $U_2$ proportionnel à la vitesse de rotation selon $k$ comme indiqué dans les relations suivantes :

$$U_1 = -2 * m * \Omega_j * V_0 * G_1 \qquad U_2 = -2 * m * \Omega_k * V_1 * G_2$$

La mise en oeuvre d'un gyromètre selon les principes exposés ci-dessus est décrite dans les figures qui suivent.

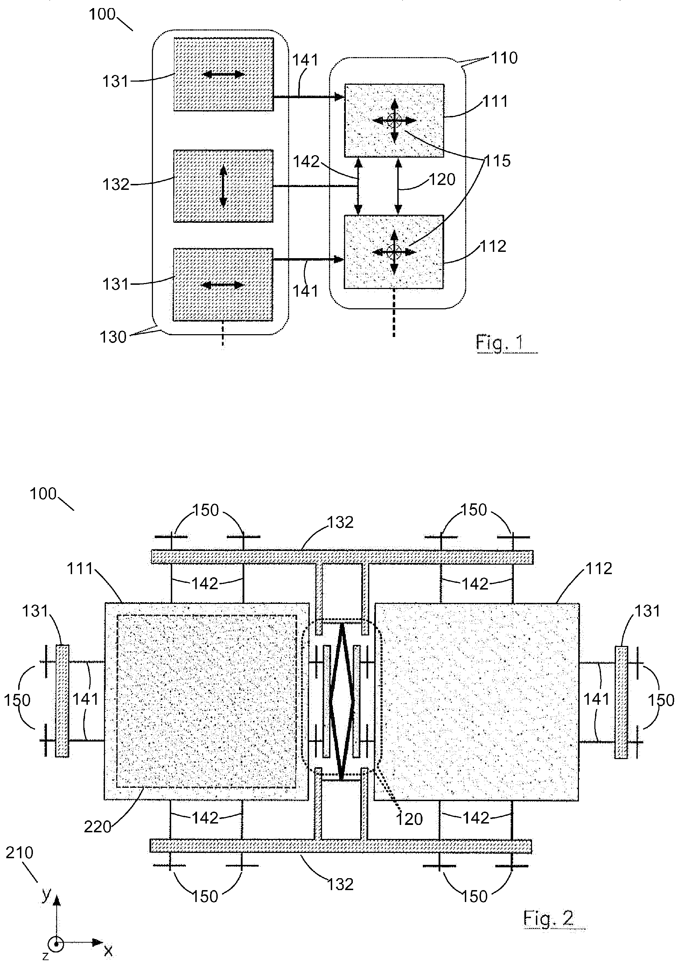

La **figure 1** montre le schéma de principe d'un gyromètre biaxial 100 selon l'invention et les interactions entre les masses mises en mouvement.

Le gyromètre 100 comprend un ensemble de masses d'inertie 110 qui est en fait ici composé de deux masses individuelles, 111 et 112, liées par un ressort de couplage 120. Ce nombre n'est pas limitatif. Dans l'exemple, l'une des masses, 112, est une masse primaire et l'autre masse, 111, sert aussi directement à la détection.

L'emploi de deux masses d'inertie 111,112, liées entre elle par un élément ressort et liées chacune au substrat par d'autres éléments ressorts permet de former un système cinématique à deux masses et deux degrés de liberté impliquant deux fréquences de résonance (ou naturelles) dans un mouvement suivant une direction (X ou Z en particulier) donnée. Notamment la formation d'un ensemble 110 à deux fréquences naturelles suivant Z permet de caler la fréquence d'excitation suivant X en fonction d'une des fréquences naturelles et de caler la fréquence d'excitation suivant Y en fonction de l'autre des fréquences naturelles. Ainsi, on recherche à atteindre un fonctionnement privilégié du système cinématique formé par l'ensemble 110 de sorte que :

- les mouvements suivant X et Y s'opèrent aux fréquences de résonance suivant ces directions ;
- le mouvement suivant Z s'opère avec deux composantes issues des forces de Coriolis générées, de sorte que la fréquence de chaque composante soit à proximité ou égale à une fréquence de résonance de l'ensemble 110 suivant Z.

Les masses d'inertie individuelles sont mises en mouvement à partir de masses d'excitation 130 à travers des ressorts de transmission, 141 et 142, qui communiquent le mouvement aux masses d'inertie chacun selon un axe privilégié. Les masses d'excitation individuelles ou excitateurs, 131 et 132, oscillent elles mêmes chacune selon un axe privilégié, c'est-à-dire selon l'un ou l'autre des deux axes orthogonaux du plan dans lequel les excitations sont communiquées aux masses d'inertie.

Afin de détecter les forces de Coriolis engendrées par les mouvements extérieurs subis par le gyromètre, les masses d'inertie 111,112 sont arrangées de telle façon qu'elles sont aussi libres de se mouvoir (toutes les deux ou au moins la masse de détection 111) selon un troisième axe, perpendiculaire au plan d'excitation, comme illustré par l'idéogramme à trois directions 115. C'est ce déplacement qui est mesuré par un moyen de détection, par exemple sous la forme de la mesure d'une variation de capacité comme décrit dans la figure suivante.

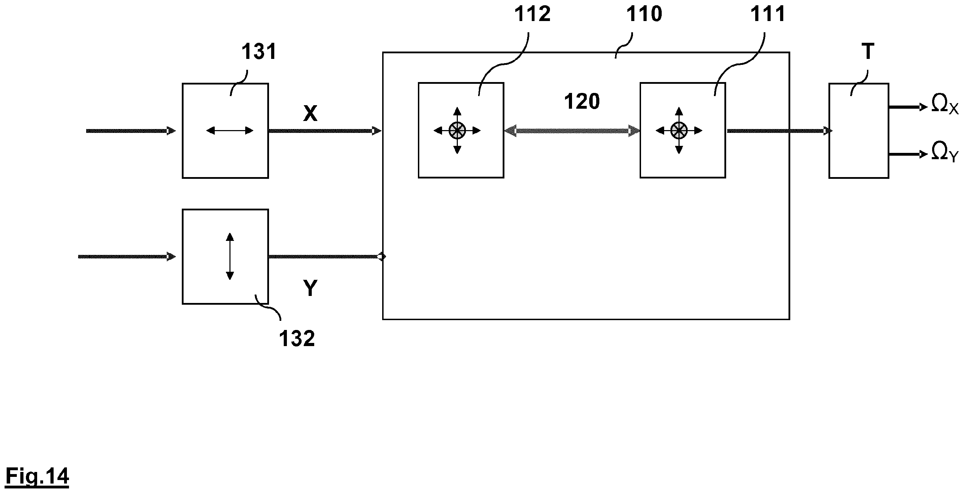

La figure 14 montre une autre vue schématique de l'invention. A cette figure :

- une masse d'excitation 131 subit une force électrostatique suivant X et produit, en conséquence, une transmission de mouvement, avantageusement suivant X seulement, vers l'ensemble d'inertie 110 et plus particulièrement au moins vers la masse d'inertie 112 de cet ensemble.
- une masse d'excitation 132 subit une force électrostatique suivant Y et produit, en conséquence, une transmission de mouvement, avantageusement suivant Y seulement, vers l'ensemble d'inertie 110 et plus particulièrement au moins vers la masse d'inertie 112 de cet ensemble.
- l'ensemble d'inertie 110 comporte, dans le cas représenté, deux masses, à savoir une masse d'inertie 112 et une masse de détection 111. Préférentiellement, les deux masses 111, 112 sont reliées de sorte à former un mobile à deux fréquences de résonnance suivant la direction Z. Ainsi, suivant la direction des forces de Coriolis, l'ensemble d'inertie dispose de deux fréquences de résonance. Par exemple, leur liaison comporte un élément ressort suivant Z. Préférentiellement, les deux masses 111, 112 sont reliées de sorte à former un mobile à deux fréquences de résonnance suivant une des directions X et Y, par exemple X. Leur liaison peut, en particulier, former un élément ressort suivant cette direction. Dans la direction restante, par exemple Y, les deux masses 111, 112 peuvent être animées du même mouvement vibratoire issu de la masse d'excitation 132. La masse de détection 111 peut ne pas être amenée de l'un, ou de l'autre, ou d'aucun des deux mouvements vibratoires suivant X et Y.
- la masse de détection assure la fonction d'un élément de captage des forces de Coriolis et coopère dans la figure 14 avec un bloc de traitement T, configuré par exemple, pour détecter les déplacements ou les forces suivant Z.
- de ce bloc T sont obtenues, via la même masse de détection 111, deux informations de mouvement, l'une suivant X, l'autre suivant Y.

Les indications X, Y, Z sont, dans la présente description, indicatives.

La **figure 2** est une vue en plan d'un exemple de mise en oeuvre du schéma de principe de la figure 1 d'un gyromètre biaxial dont le moyen de détection est capacitif. On y retrouve les deux masses d'inertie, 111 et 112, liées par le ressort de couplage 120.

Comme illustré 210, les deux axes orthogonaux du plan d'excitation sont conventionnellement notés X et Y et l'axe de détection du déplacement des masses d'inertie sous l'effet des forces de Coriolis, qui agissent perpendiculairement au plan d'excitation XY, est noté Z.

La vitesse de rotation du gyromètre autour de l'axe Y est mesurée par la force de Coriolis résultant de l'oscillation permanente communiquée aux masses d'inertie individuelles selon l'axe perpendiculaire, c'est-à-dire l'axe X. Les masses d'excitation correspondantes, c'est-à-dire les deux masses 131 qui oscillent préférentiellement selon l'axe X, sont situées de part et d'autre des masses d'inertie individuelles. Elles communiquent aux masses individuelles, 111 et 112, à l'aide des ressorts de transmission 141, des mouvements en opposition de phase de telle façon que le déplacement des masses individuelles se fasse dans des directions, selon l'axe X, toujours opposées. C'est le rôle du ressort de couplage 120 que d'absorber ces déplacements dans des directions opposées.

Dans ces conditions, une rotation autour de l'axe Y subie par le gyromètre se traduira également par un déplacement, selon l'axe Z, des masses d'inertie individuelles, 111 et 112, dans des directions opposées.

Dans l'exemple de la figure 2, la détection de ces déplacements, selon l'axe Z, se fait de façon capacitive. À cette fin, on a placé sous l'une des masses d'inertie individuelle 111, 112 une électrode fixe 220. Les déplacements engendrés par les forces de Coriolis font varier la distance entre les électrodes constituées d'une part par l'une des deux masses d'inertie individuelles, 111 ou 112, et d'autre par l'électrode fixe 220 située dessous, et donc la valeur de cette capacité. Les variations de valeur de capacité traduisent les vitesses de rotation subies par le gyromètre.

Dans le cas illustré, l'une des masses d'inertie, masse 111, sert à la détection. Elle est donc ici aussi nommée masse de détection. C'est à son niveau que la force de Coriolis, reflétée par un mouvement en un effort suivant Z, est détectée.

D'une façon symétrique, la vitesse de rotation du gyromètre autour de l'axe X est mesurée par la force de Coriolis résultant de l'oscillation permanente communiquée aux masses d'inertie individuelles selon l'axe perpendiculaire, c'est-à-dire l'axe Y. Les masses d'excitation correspondantes, c'est-à-dire les deux masses 132 qui oscillent préférentiellement selon l'axe Y, sont situées dans la représentation de la figure 2 au dessus et au dessous des masses d'inertie individuelles. Elles communiquent aux masses d'inertie individuelles, 111 et 112, à l'aide des ressorts de transmission 142, des mouvements en phase. Le déplacement de ces masses selon l'axe Y se fait donc dans une même direction. Dans ces conditions, une rotation autour de l'axe X subie par le gyromètre se traduira cette fois par un déplacement, selon l'axe Z, des masses d'inertie individuelles, 111 et 112, dans une même direction.

On notera que les masses d'excitations, 131 et 132, sont mises en mouvement à l'aide de peignes interdigitaux (non représentés) sur lesquels on applique un signal alternatif. Ces peignes forcent les masses d'excitation à se mouvoir selon une seul axe, respectivement, X et Y. Les masses d'excitation sont accrochées à des ressorts de guidage 150.

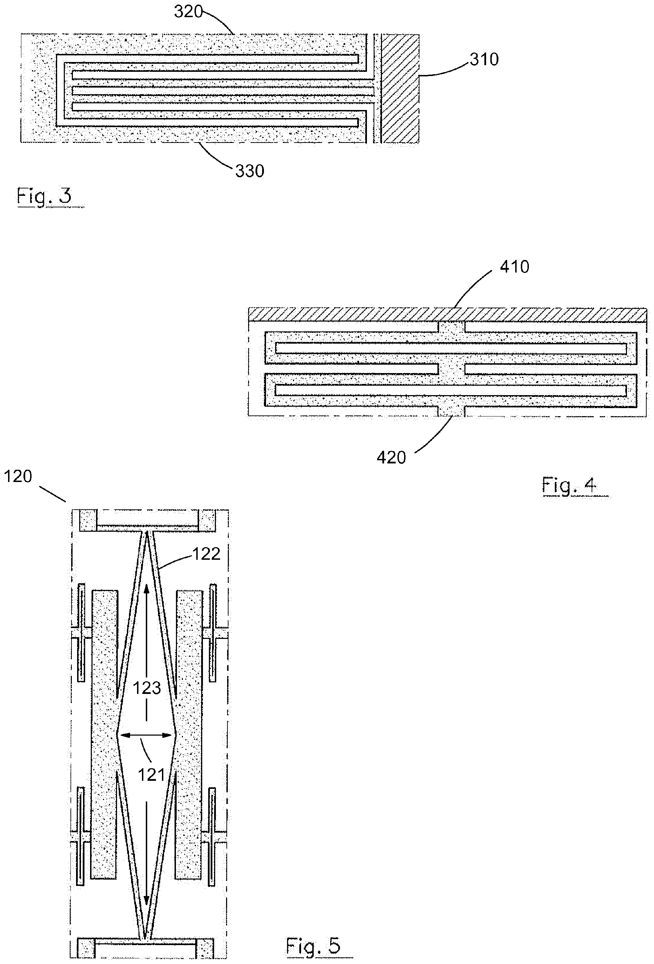

La **figure 3** illustre un type de ressort dit « replié » qui sert typiquement de ressort de transmission, 141 et 142, entre les masses d'excitation 130 et l'ensemble de masses d'inertie 110. La transmission se fait entre une entrée 310 du ressort vers l'une ou l'autre des sorties, 320 et 330, ou vers les deux simultanément.

La **figure 4** illustre un deuxième type de ressort en forme d'U. Typiquement, il peut servir de ressort de guidage 150 pour les masses d'excitation. Ce type de ressort est symétrique, l'un ou l'autre des deux côtés, 410 et 420, pouvant servir d'entrée ou de sortie.

La **figure 5** illustre la structure du ressort de couplage 120 situé entre les deux masses d'inertie, 111 et 112, qui permet qu'elles puissent se mouvoir en opposition de phase. Comme on peut le voir ce ressort, en forme de losange 122, peut se déformer en largeur 121 et hauteur 123 pour absorber les mouvements contraires des deux masses d'inertie, 111 et 112, situées de part et d'autre, quand elles s'éloignent ou se rapprochent l'une de l'autre en raison de leur opposition de phase.

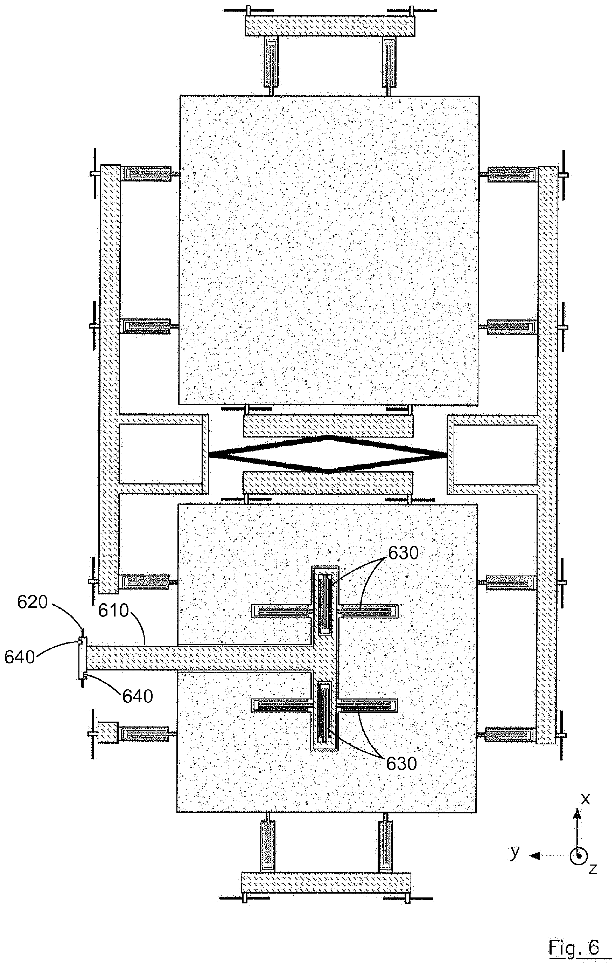

La **figure 6** est une vue en plan d'un gyromètre biaxial selon l'invention dont le moyen de détection des forces de Coriolis est cette fois un élément piézorésistif en remplacement de l'élément capacitif décrit précédemment.

On retrouve dans la figure 6 tous les éléments déjà décrits dans la figure 2. Ils ne sont pas différents à l'exception du rajout d'un bras de détection 610 pouvant tourner autour d'un pivot 620 en fonction des mouvements imprimés par les forces de Coriolis, selon l'axe Z, à la masse d'inertie 111 servant de masse de détection. Le bras est connecté à la masse d'inertie à l'aide de ressorts 630 arrangés pour ne transmettre à celui-ci que les mouvements selon l'axe Z. Les ressorts 630 sont avantageusement du même type que celui décrit en figure 3, c'est-à-dire qu'ils sont de type « replié ».

La rotation du bras applique des contraintes mécaniques en traction et compression, typiquement, à deux détecteurs piézorésistifs 640 situés dans le pivot 620. L'évaluation de la force de Coriolis générée se fait en mesurant les variations de résistance constatées du ou des éléments piézorésistifs qui subissent les contraintes mécaniques résultant du mouvement du bras 610.

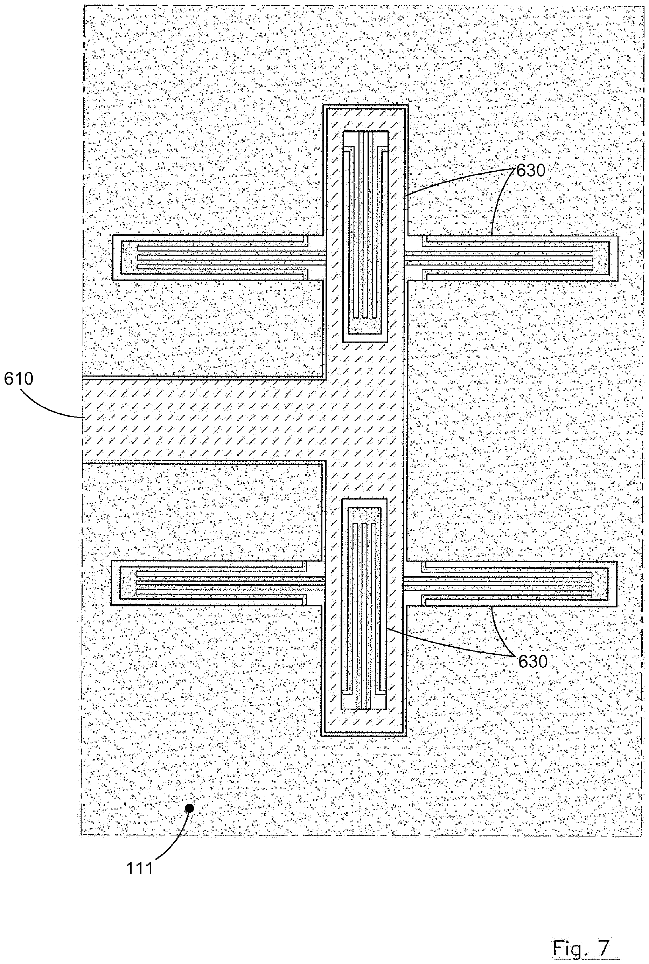

La **figure 7** est une vue détaillée du bras 610 et des ressorts 630 qui permettent de ne transmettre à ce dernier que les mouvements selon Z de la masse d'inertie 111.

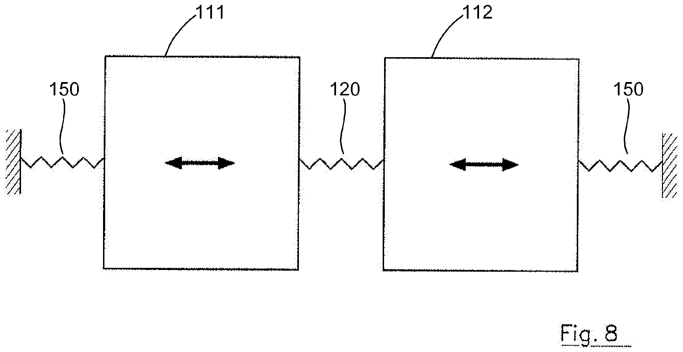

La **figure 8** est un schéma mécanique simplifié d'un système masse ressort à deux masses modélisant le comportement d'un gyromètre selon l'invention. On retrouve dans ce modèle les deux masses d'inertie, 111 de masse

$m_1$ et 112 de masse $m_2$, ainsi que le ressort de couplage 120 dont la raideur est $k_{12}$, et les ressorts de guidage 150 dont les raideurs sont respectivement $k_1$. et $k_2$.

Si on écrit les équations du mouvement des masses $m_1$ et $m_2$, on a :

$$m_1 \ddot{X}_1 + c_1 \dot{X}_1 + k_1 X_1 = F_{exc1} - k_{12} * (X_2 - X_1)$$

$$m_2 \ddot{X}_2 + c_2 \dot{X}_2 + k_2 X_2 = F_{exc2} - k_{12} * (X_1 - X_2)$$

Si on suppose de plus que $k. = k_1 = k_2$ ainsi que $m_1 = m_2$ on obtient en soustrayant la deuxième équation ci-dessus de la première :

$$m_1 (\ddot{X}_1 - \ddot{X}_2) + c_1 (\dot{X}_1 - \dot{X}_2) + k(X_1 - X_2) = F_{exc1} - F_{exc2} - 2 * k_{12} * (X_2 - X_1)$$

On peut faire un changement de variable en écrivant que **X=x1-x2** et on obtient alors :

$$m \ddot{X} + c \dot{X} + X * (k + 2 * k_{12}) = F_{exc1}$$

D'où, en opposition de phase, c'est-à-dire avec **X₁=-X₂**, on obtient une fréquence de résonance égale à :

$$w_0 = \sqrt{\frac{k + 2 * k_{12}}{m}}$$

De même en écrivant **X=x1=x2** on obtient : $m \ddot{X} + c_1 \dot{\chi} + \chi * k = F_{exc1}$ et on obtient ainsi, avec **X₁=X₂**, une fréquence de résonance en phase égale alors à : $w_0 = \sqrt{\frac{k}{m}}$

On remarque donc qu'un système masse/ressort à deux masses peut avoir deux fréquences de résonance suivant la même direction (une en phase et une autre en opposition de phase). Les appellations en phase et en opposition de phase sont utilisées car, les masses ayant des mouvements sinusoïdaux on peut écrire :

Mouvement en phase :

$$x_1(t) = x_2(t) = U_1 * \cos(\omega t)$$

et en opposition de phase :

$$x_1(t) = U_1 * \cos(\omega t) \text{ et } x_2(t) = U_1 * \cos(\omega t + \pi)$$

La fréquence de résonance lorsque **x1=x2** correspond à un système en phase, $\varphi = 0°$. La fréquence de résonance opposition de phase, lorsque **x1=-x2,** correspond à une phase $\varphi = 180°$.

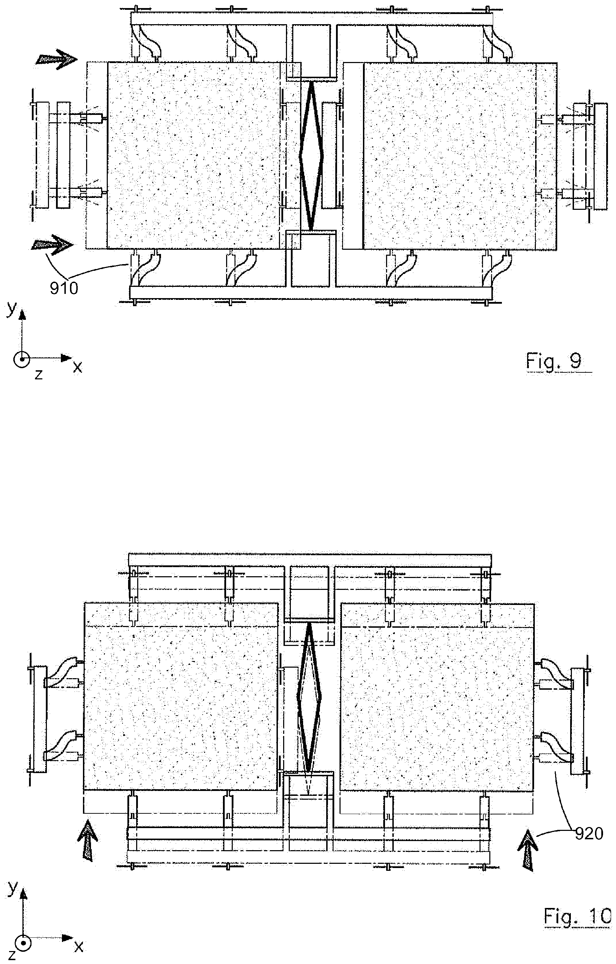

Les **figures 9 et 10** illustrent les fréquences de résonance en excitation de la masse d'inertie selon X et Y respectivement.

La fréquence de résonance $f_{RES_i}$ d'une géométrie est fixée par la relation : $f_{RES_i} = \sqrt{\frac{k_i}{m}}$ où $m$ est la masse d'inertie et $k_i$ la raideur selon la direction $i$.

Cette raideur varie en fonction des dimensions géométriques des ressorts. Une forme géométrique complexe n'aura pas nécessairement la même raideur suivant X, Y ou Z. Une fréquence de résonance est définie par rapport à une direction privilégiée. Une géométrie avantageuse pour la mise en oeuvre de l'invention aura donc une fréquence de résonance suivant X, 910, différente de celle suivant Y, 920, afin de pouvoir différencier en fréquence les forces de Coriolis résultant de rotations selon ces axes comme on l'a vu précédemment. Dans les exemples des figures 9 et 10, les fréquences de résonance sont, respectivement, de 21 kHz (kilo Hertz) et de 23 kHz.

Si l'on suppose des fréquences de résonance en excitation différentes :

$$v_Y = A*\cos(w_Y t + \varphi_Y) \quad \text{et} \quad v_X = B*\cos(w_X t + \varphi_X)$$

*A* et *B* étant les amplitudes d'excitation, $w_X$, $w_Y$ étant les fréquences d'excitation et $\varphi_X$, $\varphi_Y$ représentant la phase. En présence d'une vitesse de rotation, on obtient alors la force de Coriolis selon Z :

$$F_Z = -2*m*[\Omega_X * A * \cos(\omega_Y t) - \Omega_Y * A * \cos(\omega_X t)]$$

Comme le système à deux masses d'inertie et trois ressorts d'un gyromètre selon l'invention possède lui aussi une voire plusieurs fréquences de résonance en détection, celles-ci sont utilisées avantageusement pour permettre d'amplifier le signal et optimiser la détection. On va donc, de préférence, positionner les fréquences de résonance de détection au plus près des fréquences de résonance en excitation.

Si $w_{X(opp)}$ et $w_Y$ sont les fréquences d'excitation selon X et Y, et si $w_{detZ\_phase}$ et $w_{detZ\_oppi}$ sont les fréquences de résonance en détection en phase et opposition de phase des masses selon Z alors il est avantageux que la relation suivante soit satisfaite : $w_{detZ\_phase} = w_Y$ et $w_{detZ\_opp} = w_{X(opp)}$

De façon pratique il peut être préférable de fonctionner en boucle ouverte. C'est-à-dire avec $w_Y < w_{detZ\_phase}$ et $w_{X(opp)} < w_{detZ\_opp}$.

On entend par fonctionnement en boucle ouverte le fait qu'il n'y a pas d'asservissement électronique de la détection, en opposition au travail en boucle fermée. L'excitation est généralement toujours asservie pour un gyroscope.

Les conditions ci-dessus représentent les contraintes qu'il est avantageux de satisfaire afin d'optimiser l'amplification du signal détecté selon Z, c'est-à-dire la force de Coriolis composite comprenant une composante fréquentielle correspondant à l'axe X et une composante fréquentielle correspondant à l'axe Y.

Les fréquences en excitation correspondent aux fréquences de résonance dans le plan XY. Les paramètres principaux qui influent sur ces fréquences de résonance sont les dimensions des ressorts de guidage 150, accrochés aux masses d'excitation suivant X et Y comme montré sur la figure 2. Un exemple de ressort de guidage est illustré sur la figure 4.

Les fréquences de résonance en détection sont des fréquences de résonance hors plan XY. Les deux fréquences de résonance hors plan sont les fréquences de résonance des masses d'inertie en phase et en opposition de phase. La résonance en phase et la résonance en opposition de phase sont induites par le ressort de couplage 120 entre les deux masses d'inertie, 111 et 112. On remarque que les dimensions des ressorts de guidage, pour l'excitation, et du ressort de couplage, pour la détection, peuvent ainsi être optimisées séparément de manière à remplir les conditions des deux relations précédentes sur l'égalité qu'il doit y avoir entre fréquences de résonance en excitation et en détection.

Le calcul de ces fréquences de résonance en phase et opposition de phase figure ci-après. On utilise à cette fin la relation suivante qui exprime, comme on l'a déjà vu, la dépendance de la fréquence de résonance w en fonction de la raideur *k* et de la masse *m* : $w = \sqrt{\dfrac{k}{m}}$

En ce qui concerne la fréquence d'excitation selon Y, la fréquence de résonance prend en compte la raideur selon Y. La masse m correspond ici à la masse d'inertie du système. On obtient donc :

$$w_{Y\_exc} = \sqrt{\frac{k_Y}{m}}$$

Selon X, la fréquence de résonance prend en compte la raideur selon X et également la raideur du ressort de couplage. En reprenant le système masse ressort à deux masses du gyromètre de l'invention on en déduit que l'on aura deux fréquences de résonance : une en phase et une autre en opposition de phase.

Si on liste les différentes fréquences de résonance en d'excitation :

$$w_{X\_exc\_phase} = \sqrt{\frac{k_X}{m}} \quad \text{et} \quad \omega_{X\_EXC\_opp} = \sqrt{\frac{k_X + 2*k_{X12}}{m}} \quad \text{et} \quad \omega_Y = \sqrt{\frac{k_Y}{m}}$$

En ce qui concerne les fréquences de détection, on peut projeter le système dans la direction hors plan, c'est-à-dire selon Z, et également se ramener à un système masse ressort à deux masses. Comme pour X on obtient deux fréquences de résonance :

$$\omega_{Z\_opp} = \sqrt{\frac{k_Z + 2*k_{Z12}}{m}} \quad \text{et} \quad w_{Z\_phase} = \sqrt{\frac{k_Z}{m}}$$

On peut expliciter les conditions d'égalité entre fréquences de résonance selon X et Y et fréquences de détection selon Z grâce aux relations suivantes :

$$W_{X\_EXC\_opp} = w_{Z\_opp} \text{ et } W_y = W_{Z\_phase}$$

Les conditions d'égalité entre fréquences de résonance et fréquences de détection sont donc équivalentes aux conditions ci-dessous :

$$\sqrt{\frac{k_X + 2*k_{X12}}{m}} = \sqrt{\frac{k_Z + 2*k_{Z12}}{m}} \quad \text{et} \quad \sqrt{\frac{k_Y}{m}} = \sqrt{\frac{k_Z}{m}}$$

En termes de mouvement, il y a une correspondance entre les mouvements d'excitation et les mouvements de détection.

Une fréquence de résonance en excitation (dans le plan XY) en phase doit être couplé à une fréquence de résonance en détection (hors-plan, Z) en phase également.

De même, une fréquence de résonance en excitation (dans le plan XY) en opposition de phase doit être couplé à une fréquence de résonance en détection (hors-plan, Z) en opposition de phase également.

Les conditions ci-dessus sur les fréquences de détection s'appliquent dans le cas d'une détection capacitive. Dans le cas de l'utilisation d'une détection piézorésistive et de l'utilisation d'un détecteur piézorésistif comme décrit en figure 6, les conditions sur les fréquences de résonances sont les mêmes dans le plan XY mais hors plan, selon Z, il faut alors tenir compte de la raideur du bras de détection.

On retrouve les fréquences de résonance dans le plan identiques à ce qui a été vu précédemment :

$$\omega_{X\_EXC\_opp} = \sqrt{\frac{k_X + 2*k_{X12}}{m}} \quad \text{et} \quad w_{Y\_exc} = \sqrt{\frac{k_Y}{m}}$$

En revanche les fréquences de résonance hors plan, selon Z, sont augmentées d'une constante $\sqrt{k_{\det}}$ comme suit:

$$\omega_{Z\_opp} = \sqrt{\frac{k_Z + 2 * k_{Z12} + k_{\det}}{m}} \quad \text{et} \quad w_{Z\_phase} = \sqrt{\frac{k_Z + k_{\det}}{m}}$$

Comme ci-dessus, on peut expliciter la condition d'égalité entre fréquences de résonance selon X et Y et fréquences de détection selon Z grâce aux relations suivantes :

$$W_{X\_EXc\_opp} = w_{Z\_opp} \quad \text{et} \quad W_y = W_{Z\_phase}$$

Dans le cas d'une détection piézorésistive, les conditions d'égalité entre fréquences de résonance dans le plan en excitation et fréquences de détection deviennent donc :

$$\sqrt{\frac{k_X + 2 * k_{X12}}{m}} = \sqrt{\frac{k_Z + 2 * k_{Z12} + k_{\det}}{m}} \quad \text{et} \quad \sqrt{\frac{k_Y}{m}} = \sqrt{\frac{k_Z + k_{\det}}{m}}$$

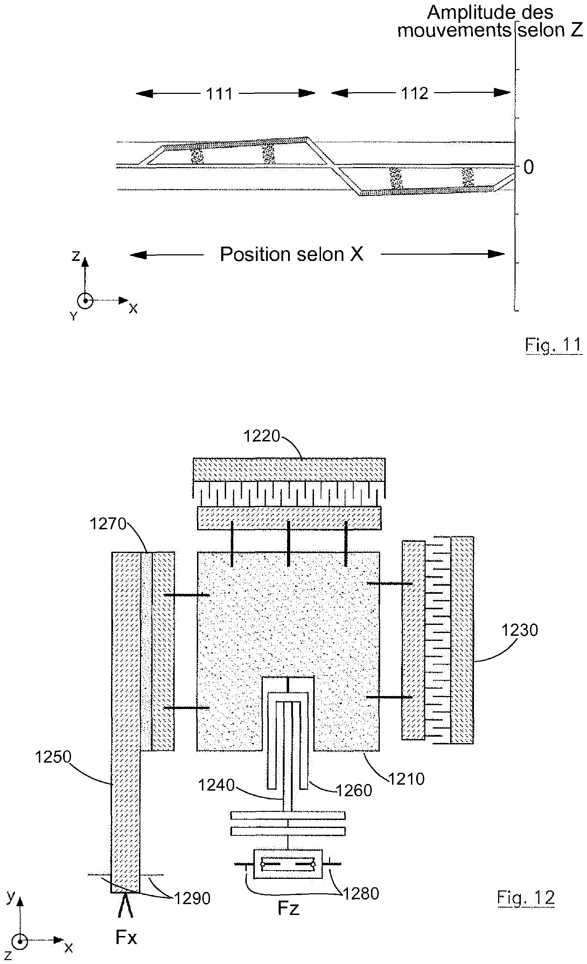

La **figure 11** illustre le cas de la détection de mouvements selon Z des masses d'inertie, 111 et 112, quand elles sont en opposition de phase.

La **figure 12** illustre le schéma de principe d'une centrale inertielle cinq axes à excitation dans le plan.

Un premier aspect de ce mode de réalisation est la mise en oeuvre d'une seule masse d'inertie 1210 qui sert aussi de masse de détection.

Si l'on considère une masse inertielle excitée selon les trois axes X, Y et Z, à des fréquences qui sont respectivement : $w_X$, $w_Y$ et $w_Z$ correspondant à une excitation électrostatique qui s'exprime, par exemple selon Y, comme suit :

$$v_Y = A * \cos(w_Y t + \varphi_Y) \; ; \quad \text{alors les forces de Coriolis créées sont les suivantes :}$$

$$F_X = -2 * m * (\Omega_Y \wedge \upsilon_Z + \Omega_Z \wedge \upsilon_Y)$$

$$F_Y = -2 * m * (\Omega_X \wedge \upsilon_Z + \Omega_Z \wedge \upsilon_X)$$

$$F_Z = -2 * m * (\Omega_X \wedge \upsilon_Y + \Omega_Y \wedge \upsilon_X)$$

Les forces induites par les effets de Coriolis suivant chaque axe donnent des informations sur les vitesses de rotation suivant les deux autres axes. En mesurant les forces appliquées sur la masse d'inertie suivant seulement deux axes il est donc possible d'avoir accès aux vitesses angulaires selon les trois axes.

Les améliorations possibles d'un tel dispositif portent sur :

- la séparation de l'excitation et de la détection afin de ne pas mesurer les vibrations qui ont des amplitudes beaucoup plus importantes que les signaux induits par la force de Coriolis.
- La dissociation des différentes parties de détection. Un système de ressort à deux étages pour lequel chaque étage a pour mission de ne pas transmettre le mouvement ni les contraintes suivant un axe sélectionné (deux étages étant nécessaires pour ne transmettre le mouvement que selon un seul axe, l'axe de mesure).
- Une insensibilité à l'accélération. Un équilibre ou un système de type « double masse » pourra être implémenté pour qu'une accélération n'induise pas de signal sur les diverses parties de détection.

Si l'on examine les trois équations ci-dessus on remarque que seules les excitations dans le plan XY sont nécessaires afin d'obtenir les vitesses de rotation selon tous les axes : $\Omega_X$ et $\Omega_Y$ étant mesurés à travers $F_Z$ et $\Omega_Z$ étant mesuré à travers $F_X$ ou $F_Y$.

Sur la figure 12 la masse inertielle centrale 1210 est excitée dans le plan XY par des masses périphériques, 1220 et 1230, ne transmettant que le mouvement selon l'axe d'excitation correspondant, respectivement selon Y et X. La partie détection comprend un bras, 1240, mesurant la force selon $F_Z$. Par ailleurs, une masse additionnelle 1250 est formée avec un mouvement autour d'un pivot suivant Z permettant de mesurer une force $F_x$ selon X, force de Coriolis induite sur la masse d'inertie 1210 par un mouvement de rotation suivant Z en présence d'une excitation suivant Y. La mobilité de la masse d'inertie 1210 en rotation suivant Z fait ainsi l'objet d'une détection.

Les ressorts, 1260 et 1270, liant les parties détection et la masse d'inertie 1210 sont dimensionnés de manière à ne transmettre à la partie détection que la contrainte selon l'axe de détection correspondant, respectivement selon Z et selon X. On remarque que chacune des parties détection possède un bras de levier afin d'amplifier au maximum le signal délivré par la masse d'inertie.

Si l'on reprend la première des équations ci-dessus, celle donnant $F_X$, et la troisième, celle donnant $F_Z$, et en les appliquant au système de la figure 12 on trouve que les mouvements détectés à travers les bras de détection sont :

$$F_Z = -2 * m * (\Omega_X \wedge \upsilon_Y + \Omega_Y \wedge \upsilon_X) + a_Z$$

$$F_X = -2 * m * \Omega_Z \wedge \upsilon_Y + \upsilon_X + a_X$$

Le bras Z 1240 mesure un signal ayant trois composantes :

- une composante $\Omega_X$ à une fréquence $w_Y$,
- une composante $\Omega_Y$ à une fréquence $w_X$,
- la composante $a_Z$ de l'accélération à une fréquence basse typiquement inférieure à 1 kHz.

De même le bras X 1250 mesure :

- une composante $\Omega_Z$ à une fréquence $w_Y$;
- l'accélération selon X, c'est-à-dire $a_X$;
- l'excitation selon X (Vx) sera également visible à une fréquence $w_X$. Elle sera de préférence éliminée lors de la démodulation du signal.

Ce qui est résumé dans le tableau ci-dessous.

| | Composantes fréquentielles du signal $F_Z$ | | | Composantes fréquentielles du signal $F_X$ | | |
|---|---|---|---|---|---|---|
| Composante : | $a_Z$ | $\Omega_Y$ | $\Omega_X$ | $a_X$ | Vx | $\Omega_Z$ |
| Fréquence : | Basse | $w_X$ | $w_Y$ | Basse | $w_X$ | $w_Y$ |

Avec le système de la figure 12 on mesure donc cinq axes avec seulement deux paires de jauges piézorésistives, 1280 et 1290. On réduit donc la surface nécessaire aux connexions électriques.

Bien que non représentée, une alternative est possible avec une détection de composantes fréquentielles du signal de mesure de la force FY, force de Coriolis selon y. L'ensemble formé par les éléments repérés 1250, 1270, 1290 sont simplement pivotés de 90° et en liaison avec l'excitateur 1220.

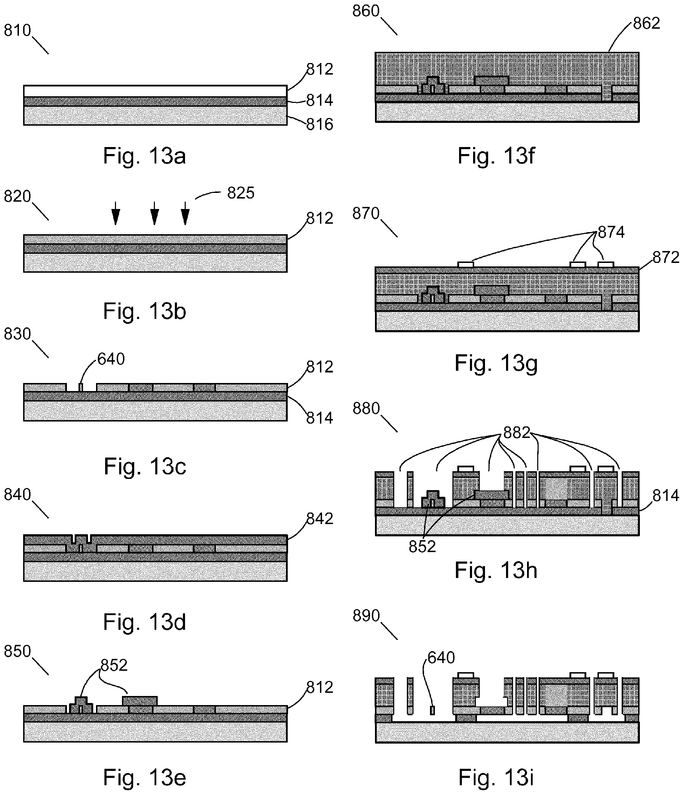

Les **figures 13a à 13i** décrivent les étapes principales d'un procédé de réalisation de MEMS compatible avec la fabrication de capteurs inertiels selon l'invention. Les étapes du procédé mettent potentiellement en oeuvre toutes les techniques connues (photolithographie, gravure, dépôt de matériaux de toutes sortes, etc.) et méthodes de fabrication mises au point par l'industrie de la microélectronique pour la fabrication des circuits intégrés et des dispositifs électromécaniques de type MEMS.

Le matériau de départ est un substrat élaboré 810 dit SOI de l'anglais « silicon on insulator » comportant en surface une couche mince de silicium monocristallin 812 isolé par une couche d'oxyde 814 du substrat 816. La couche 812 a typiquement une épaisseur de 400 nm (nanomètre = $10^{-9}$ mètre) et la couche d'oxyde 814, dite enterrée, a une épaisseur typique de 1 $\mu$m (micromètre = $10^{-6}$ mètre).

L'étape suivante 820 consiste à doper la couche de silicium monocristallin 812 par implantation ionique 825 et à procéder à une homogénéisation sur toute l'épaisseur de la couche de silicium en pratiquant un recuit thermique, typiquement à 1050°C pendant 5mn.

L'étape suivante 830 consiste à définir par photolithographie et à graver dans la couche de silicium monocristallin 812 la partie dite mince des MEMS. C'est dans cette couche que l'on réalise notamment les jauges piézorésistives, par exemple les jauges 640 de la figure 6. L'arrêt de la gravure se fait sur l'oxyde de la couche enterrée 814.

Ensuite, à l'étape suivante 840, on procède à un dépôt d'une couche d'oxyde de silicium 842 qui va servir de protection lors des opérations de libération des parties mobiles du MEMS décrites ci-après. Typiquement, une épaisseur de 250 nm est déposée par la technique de dépôt HDP (High Density Plasma) par exemple.

À l'étape 850, on réalise la gravure des motifs de protection dans la couche d'oxyde de silicium d'une épaisseur de 250 nm. L'arrêt de la gravure se fait sur la couche de silicium 812.

À l'étape 860, on procède à une épitaxie épaisse de silicium afin d'obtenir la couche 862 dans laquelle les parties fixes et mobiles du MEMS seront réalisées. Typiquement, l'épaisseur déposée est de 20 $\mu$m. La couche 862 est aplanie après croissance, typiquement, à l'aide d'un polissage mécano chimique de type dit CMP, acronyme de l'anglais « chemical mechanical polishing ».

À l'étape 870, on dépose un métal, par exemple un alliage d'aluminium et de silicium (AlSi), ce qui permet après photolithographie et gravure de former toutes les interconnexions électriques nécessaires 874 sur une couche 872.

La couche 872 est une couche implantée (fortement dopé, identique à l'étape 820). Elle est utilisée pour améliorer le contact Métal/Silicium.

Une gravure profonde du silicium est ensuite réalisée à l'étape 880 qui permet, dans la couche épaisse 882, de délimiter les parties mobiles du MEMS, notamment les deux masses du capteur inertiel de l'invention avec ses ressorts. La gravure se fait jusqu'à l'arrêt sur une couche d'oxyde. Par exemple, sur les motifs de protection 852 délimités précédemment à l'étape 850. La couche d'oxyde 814 du substrat SOI sert aussi de couche d'arrêt là où aucun motif de protection n'a été formé.

La libération des parties mobiles se fait à l'étape suivante 890, en dissolvant les parties des couches d'oxyde dites sacrificielles, là où elles sont devenues accessibles après la gravure profonde. On obtient ainsi la structure représentée où les parties mobiles sont libérées (il n'y a plus d'oxyde sous jacent). Les jauges piézorésistives suspendues 640 réalisées dans la couche mince 812 sont également libérées pour pouvoir être mises en tension/compression par les bras pivotants, comme par exemple le bras 610 de la figure 6.

L'invention n'est pas limitée aux modes de réalisation décrits.

## Revendications

1. Capteur inertiel de mouvements de rotation comprenant :

    - au moins une masse d'inertie (112, 1210) mobile dans l'espace (X, Y, Z) ;
    - un premier excitateur (131) configuré pour générer un premier mouvement vibratoire de la masse d'inertie suivant une première direction (X), de sorte à générer une première force de Coriolis selon une troisième direction (Z), induite par un mouvement de rotation de la masse d'inertie suivant une deuxième direction (Y), les première, deuxième et troisième directions étant perpendiculaires entre elles;
    - un deuxième excitateur (132) configuré pour générer un deuxième mouvement vibratoire de la masse d'inertie (112, 1210) suivant la deuxième direction (Y) de sorte à générer une deuxième force de Coriolis selon la troisième direction (Z), induite par un mouvement de rotation de la masse d'inertie (112, 1210) suivant la première direction (X);
    - des moyens de détection de la première force de Coriolis et de la deuxième force de Coriolis, dans lequel les moyens de détection comprennent un détecteur commun pour la première force de Coriolis et de la deuxième force de Coriolis et configuré pour produire un signal électrique traité par un circuit de traitement de sorte à discriminer une première composante du signal électrique correspondant à la première force de Coriolis et une deuxième composante du signal électrique correspondant à la deuxième force de Coriolis, et **caractérisé par le fait qu'**il comporte une masse de détection (111) cinématiquement reliée à la masse d'inertie (112) et au niveau de laquelle le détecteur commun détecte la première force de Coriolis et la deuxième force de Coriolis.

2. Capteur selon la revendication précédente dans lequel la fréquence du premier mouvement vibratoire est différente de la fréquence du deuxième mouvement vibratoire.

3. Capteur selon la revendication précédente dans lequel le circuit de traitement des moyens de détection, est configuré pour opérer un traitement fréquentiel du signal électrique.

4. Capteur selon la revendication précédente dans lequel le circuit de traitement comporte un premier filtre de fréquences configuré pour discriminer la première composante du signal électrique et un deuxième filtre de fréquences configuré pour discriminer la deuxième composante du signal électrique.

5. Capteur selon l'une des revendications précédentes dans lequel le circuit de traitement comporte, pour chacune des première et deuxième composantes, une démodulation de variation d'amplitude.

6. Capteur selon l'une des revendications précédentes dans lequel le premier excitateur (131) est configuré pour faire vibrer la masse d'inertie (112, 1210) à sa fréquence de résonance suivant la première direction (X).

7. Capteur selon l'une des revendications précédentes dans lequel le second excitateur (132) est configuré pour faire vibrer la masse d'inertie (112, 1210) à sa fréquence de résonance suivant la deuxième direction (Y).

8. Capteur selon l'une des revendications précédentes dans lequel le premier excitateur (131) comporte un générateur du premier mouvement vibratoire et une masse d'excitation entrainée en vibration par le générateur et cinématiquement reliée à la masse d'inertie de sorte à lui fournir le premier mouvement vibratoire et à ne pas transmettre au moins en partie des mouvements suivant la deuxième et la troisième direction (Z).

9. Capteur selon l'une des revendications précédentes dans lequel le deuxième excitateur comporte un générateur du deuxième mouvement vibratoire et une masse d'excitation entrainée en vibration par ledit générateur et cinématiquement reliée à la masse d'inertie de sorte à lui fournir le deuxième mouvement vibratoire et à ne pas transmettre au moins en partie des mouvements suivant la première et la troisième direction (Z).

10. Capteur selon l'une des revendications précédentes dans lequel la masse de détection (111) est cinématiquement reliée à la masse d'inertie (112) par une liaison configurée pour former avec la masse d'inertie (112), selon la première direction (X), un ensemble d'inertie (110) présentant au moins deux fréquences de résonnance.

11. Capteur selon l'une des revendications précédentes dans lequel la masse de détection (111) est cinématiquement reliée à la masse d'inertie (112) de sorte à être animée du deuxième mouvement vibratoire.

12. Capteur selon l'une des revendications précédentes dans lequel la masse de détection (111) est cinématiquement reliée à la masse d'inertie (112) de sorte à former, dans la troisième direction (Z), un ensemble d'inertie (110) présentant au moins deux fréquences de résonance.

13. Capteur selon la revendication 12 dans lequel la fréquence du premier mouvement vibratoire et la fréquence du deuxième mouvement vibratoire sont inférieures ou égales respectivement à une première et une deuxième fréquences de résonance de l'ensemble d'inertie dans la troisième direction (Z).

14. Capteur selon la revendication précédente dans lequel la première fréquence de résonance est une fréquence de résonance en opposition de phase et la deuxième fréquence de résonance est une fréquence de résonance en phase.

15. Capteur selon l'une des revendications précédentes comportant :

   - une masse d'inertie additionnelle (1250) mobile dans un plan formé par la deuxième direction (Y) et la direction (Z) de la première force de Coriolis et de la deuxième force de Coriolis, ladite masse d'inertie additionnelle étant reliée à la masse d'inertie (1210) de manière à transmettre à ladite masse d'inertie additionnelle une force de Coriolis selon la deuxième direction (Y) induite par un mouvement de rotation de ladite masse d'inertie suivant la troisième direction (Z) hors du plan (x, y) ;
   - un détecteur additionnel (1290) configuré pour détecter ladite force de Coriolis (1290).

16. Capteur selon l'une des revendications précédentes comportant :

   - une masse d'inertie additionnelle (1250) reliée à la masse d'inertie (1210) de sorte à transmettre à ladite masse d'inertie additionnelle une force de Coriolis selon la première direction (X) induite par un mouvement de rotation de ladite masse d'inertie suivant la troisième direction (Z) hors du plan (x, y) ;
   - un détecteur additionnel configuré pour détecter ladite force de Coriolis.

**Patentansprüche**

1. Inertialsensor für Drehbewegungen, umfassend:

   - eine Trägheitsmasse (112, 1210), die im Raum (X, Y, Z) beweglich ist;
   - einen ersten Erreger (131), der konfiguriert ist, um eine erste Vibrationsbewegung der Trägheitsmasse in einer ersten Richtung (X) derart zu erzeugen, um eine erste Coriolis-Kraft in einer dritten Richtung (Z) zu erzeugen, die durch eine Drehbewegung der Trägheitsmasse in einer zweiten Richtung (Y) induziert wird, wobei die erste, zweite und dritte Richtung zueinander senkrecht sind;
   - einen zweiten Erreger (132), der konfiguriert ist, um eine zweite Vibrationsbewegung der Trägheitsmasse (112, 1210) in einer zweiten Richtung (Y) derart zu erzeugen, um eine zweite Coriolis-Kraft in der dritten Richtung (Z) zu erzeugen, die durch eine Drehbewegung der Trägheitsmasse (112, 1210) in der ersten Richtung (X) induziert wird;
   - Mittel zum Erfassen der ersten Coriolis-Kraft und der zweiten Coriolis-Kraft, wobei die Mittel zum Erfassen einen Detektor aufweisen, der für die erste Coriolis-Kraft und die zweite Coriolis-Kraft gemeinsam ist und konfiguriert ist, um ein elektrisches Signal zu erzeugen, das von einer Verarbeitungsschaltung derart verarbeitet wird, um eine erste Komponente des elektrischen Signals, die der ersten Coriolis-Kraft entspricht, und eine zweite Komponente des elektrischen Signals zu unterscheiden, die der zweiten Coriolis-Kraft entspricht, und **dadurch gekennzeichnet, dass** er eine Erfassungsmasse (111) aufweist, die kinetisch mit der Trägheitsmasse (112) verbunden ist und an der der gemeinsame Detektor die erste Coriolis-Kraft und die zweite Coriolis-Kraft erfasst.

2. Sensor nach dem vorhergehenden Anspruch, wobei sich die Frequenz der ersten Vibrationsbewegung von der Frequenz der zweiten Vibrationsbewegung unterscheidet.

3. Sensor nach dem vorhergehenden Anspruch, wobei die Verarbeitungsschaltung der Mittel zum Erfassen konfiguriert ist, um eine Frequenzverarbeitung des elektrischen Signals vorzunehmen.

4. Sensor nach dem vorhergehenden Anspruch, wobei die Verarbeitungsschaltung eine ersten Frequenzfilter, der konfiguriert ist, um die erste Komponente des elektrischen Signals zu unterscheiden, und einen zweiten Frequenzfilter aufweist, der konfiguriert ist, um die zweite Komponente des elektrischen Signals zu unterscheiden.

5. Sensor nach einem der vorhergehenden Ansprüche, wobei die Verarbeitungsschaltung für jede von der ersten und zweiten Komponente eine Demodulation der Amplitudenvariation aufweist.

6. Sensor nach einem der vorhergehenden Ansprüche, wobei der erste Erreger (131) konfiguriert ist, um die Trägheitsmasse (112, 1210) in der ersten Richtung (X) in ihrer Resonanzfrequenz schwingen zu lassen.

7. Sensor nach einem der vorhergehenden Ansprüche, wobei der zweite Erreger (132) konfiguriert ist, um die Trägheitsmasse (112, 1210) in der zweiten Richtung (Y) in ihrer Resonanzfrequenz schwingen zu lassen.

8. Sensor nach einem der vorhergehenden Ansprüche, wobei der erste Erreger (131) einen Generator der ersten Vibrationsbewegung und eine Erregungsmasse aufweist, die durch den Generator in Vibration versetzt wird und kinetisch mit der Trägheitsmasse derart verbunden ist, um ihr die erste Vibrationsbewegung zu verleihen und mindestens teilweise keine Bewegungen in der zweiten und dritten Richtung (Z) zu übertragen.

9. Sensor nach einem der vorhergehenden Ansprüche, wobei der zweite Erreger einen Generator der zweiten Vibrationsbewegung und eine Erregungsmasse aufweist, die durch den Generator in Vibration versetzt wird und kinetisch mit der Trägheitsmasse derart verbunden ist, um ihr die zweite Vibrationsbewegung zu verleihen und mindestens teilweise keine Bewegungen in der ersten und dritten Richtung (Z) zu übertragen.

10. Sensor nach einem der vorhergehenden Ansprüche, wobei die Erfassungsmasse (111) durch eine Verbindung, die konfiguriert ist, um mit der Trägheitsmasse (112) in der ersten Richtung (X) eine Trägheitsanordnung (110) zu bilden, die mindestens zwei Resonanzfrequenzen aufweist, kinetisch mit der Trägheitsmasse (112) verbunden ist.

11. Sensor nach einem der vorhergehenden Ansprüche, wobei die Erfassungsmasse (111) mit der Trägheitsmasse (112) derart kinetisch verbunden ist, um von der zweiten Vibrationsbewegung angetrieben zu werden.

**EP 2 600 104 B1**

**12.** Sensor nach einem der vorhergehenden Ansprüche, wobei die Erfassungsmasse (111) kinetisch derart mit der Trägheitsmasse (112) verbunden ist, um in der dritten Richtung (Z) eine Trägheitsanordnung (110) zu bilden, die mindestens zwei Resonanzfrequenzen aufweist.

**13.** Sensor nach Anspruch 12, wobei die Frequenz der ersten Vibrationsbewegung und die Frequenz der zweiten Vibrationsbewegung jeweils niedriger oder gleich einer ersten oder einer zweiten Resonanzfrequenz der Trägheitsanordnung in der dritten Richtung (Z) sind.

**14.** Sensor nach dem vorhergehenden Anspruch, wobei die erste Resonanzfrequenz eine Resonanzfrequenz in Gegenphase ist und die zweite Resonanzfrequenz eine Resonanzfrequenz in Phase ist.

**15.** Sensor nach einem der vorhergehenden Ansprüche, umfassend:

- eine zusätzliche Trägheitsmasse (1250), die in einer Ebene beweglich ist, die durch die zweite Richtung (Y) und die Richtung (Z) der ersten Coriolis-Kraft und der zweiten Coriolis-Kraft gebildet ist, wobei die zusätzliche Trägheitsmasse mit der Trägheitsmasse (1210) derart verbunden ist, um auf die zusätzliche Trägheitsmasse eine Coriolis-Kraft in der zweiten Richtung (Y) zu übertragen, die durch eine Drehbewegung der Trägheitsmasse in der dritten Richtung (Z) außerhalb der Ebene (x, y) induziert wird;
- einen zusätzlichen Detektor (1290), der konfiguriert ist, um die Coriolis-Kraft (1290) zu erfassen.

**16.** Sensor nach einem der vorhergehenden Ansprüche, umfassend:

- eine zusätzliche Trägheitsmasse (1250), die mit der Trägheitsmasse (1210) derart verbunden ist, um auf die zusätzliche Trägheitsmasse eine Coriolis-Kraft in der ersten Richtung (X) zu übertragen, die durch eine Drehbewegung der Trägheitsmasse in der dritten Richtung (Z) außerhalb der Ebene (x, y) induziert wird,
- einen zusätzlichen Detektor, der konfiguriert ist, um die Coriolis-Kraft zu erfassen.

**Claims**

**1.** An inertial micro-sensor of angular displacements comprising:

• at least one inertial mass (112, 1210) movable in space (X, Y, Z);
• a first exciter (131) configured to generate a first vibratory movement of the inertial mass along a first direction (X), so as to generate a first Coriolis force along a third direction (Z), induced by an angular displacement of the inertial mass around a second direction (Y), the first, second and third directions being mutually perpendicular;
• a second exciter (132) configured to generate a second vibratory movement of the inertial mass (112, 1210) along a second direction (Y), so as to generate a second Coriolis force along the third direction (Z), induced by an angular displacement of the inertial mass (112, 1210) around the first direction (X);
• means for detecting the first Coriolis force and the second Coriolis force,

wherein the detection means comprise a common detector for the first Coriolis force and the second Coriolis force and configured to produce an electrical signal processed by a processing circuit so as to distinguish a first component of the electrical signal corresponding to the first Coriolis force and a second component of the electrical signal corresponding to the second Coriolis force, and **characterized by** the fact that it is provided with a detection mass (111) kinematically linked to the inertial mass (112) and at which the common detector detects the first Coriolis force and the second Coriolis force.

**2.** A sensor according to the preceding claim, wherein the frequency of the first vibratory movement is different from the frequency of the second vibratory movement.

**3.** A sensor according to the preceding claim, wherein the processing circuit of the detection means is configured to achieve frequency processing of the electrical signal.

**4.** A sensor according to the preceding claim, wherein the processing circuit is provided with a first frequency filter configured to distinguish the first component of the electrical signal and a second frequency filter configured to distinguish the second component of the electrical signal.

5. A sensor according to one of the preceding claims, wherein for each of the first and second components, the processing circuit is provided with demodulation of the variation of amplitude.

6. A sensor according to one of the preceding claims, wherein the first exciter (131) is configured to make the inertial mass (112, 1210) vibrate at its resonance frequency along the first direction (X).

7. A sensor according to one of the preceding claims, wherein the second exciter (132) is configured to make the inertial mass (112, 1210) vibrate at its resonance frequency along the second direction (Y).

8. A sensor according to one of the preceding claims, wherein the first exciter (131) is provided with a generator of the first vibratory movement and with an excitation mass driven in vibration by the generator and kinematically linked to the inertial mass so as to deliver thereto the first vibratory movement without transmitting at least part of the movements along the second and third direction (Z).

9. A sensor according to one of the preceding claims, wherein the second exciter is provided with a generator of the second vibratory movement and with an excitation mass driven in vibration by the said generator and kinematically linked to the inertial mass so as to deliver thereto the second vibratory movement without transmitting at least part of the movements along the first and third direction (Z).

10. A sensor according to one of the preceding claims, wherein the detection mass (111) is kinematically linked to the inertial mass (112) by a link configured to form, together with the inertial mass (112), along the first direction (X), an inertial assembly (110) exhibiting at least two resonance frequencies.

11. A sensor according to one of the preceding claims, wherein the detection mass (111) is kinematically linked to the inertial mass (112) so as to be animated by the second vibratory movement

12. A sensor according to one of the preceding claims, wherein the detection mass (111) is kinematically linked to the inertial mass (112) so as to form, in the third direction (Z), an inertial assembly (110) exhibiting at least two resonance frequencies

13. A sensor according to claim 12, wherein the frequency of the first vibratory movement and the frequency of the second vibratory movement are lower than or equal respectively to a first and a second resonance frequency of the inertial assembly in the third direction (Z).

14. A sensor according to the preceding claim, wherein the first resonance frequency is a resonance frequency in phase opposition and the second resonance frequency is a resonance frequency in phase.

15. A sensor according to one of the preceding claims, comprising:

   • an additional inertial mass (1250), movable in a plane formed by the second direction (Y) and the direction (Z) of the first Coriolis force and of the second Coriolis force, the said additional inertial mass being linked to the inertial mass (1210) in such a way as to transmit to the said additional inertial mass a Coriolis force along the second direction (Y), induced by an angular displacement of the said inertial mass around the third direction (Z) out of the plane (x, y);
   • an additional detector (1290) configured to detect the said Coriolis force (1290).

16. A sensor according to one of the preceding claims, comprising:

   • an additional inertial mass (1250) linked to the inertial mass (1210) so as to transmit to the said additional inertial mass a Coriolis force along the first direction (X), induced by an angular displacement of the said inertial mass around the third direction (Z) out of the plane (x, y);
   • an additional detector configured to detect the said Coriolis force.

Fig. 1

Fig. 2

320

310

330

Fig. 3

410

420

Fig. 4

120

122

123

121

Fig. 5

Fig. 6

Fig. 7

Fig. 8

910

y
z
x

Fig. 9

920

y
z
x

Fig. 10

Amplitude des
mouvements selon Z

◄——— 111 ———►  ◄——— 112 ———►

0

Z

Y

X

◄——— Position selon X ———►

Fig. 11

1220

1270

1230

1250

1240

1260

1210

y

z

x

Fx

Fz

1290

1280

Fig. 12

810

Fig. 13a

812
814
816

820

825

812

Fig. 13b

830

640

812

814

Fig. 13c

840

842

Fig. 13d

850

852

812

Fig. 13e

860

862

Fig. 13f

870

874

872

Fig. 13g

880

882

814

852

Fig. 13h

890

640

Fig. 13i

**Fig.14**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090205423 A1